(19)

Europäisches
Patentamt
European
Patent Office
Office européen
des brevets

(11)  **EP 4 050 677 A1**

(12)  **EUROPEAN PATENT APPLICATION**

(43) Date of publication:
**31.08.2022  Bulletin 2022/35**

(21) Application number: **21159562.4**

(22) Date of filing: **26.02.2021**

(51) International Patent Classification (IPC):
$H01M\ 4/134$ (2010.01)    $H01M\ 4/1395$ (2010.01)
$H01M\ 4/38$ (2006.01)    $H01M\ 4/62$ (2006.01)
$H01M\ 10/052$ (2010.01)    $H01M\ 10/0562$ (2010.01)
$H01M\ 10/0565$ (2010.01)    $H01M\ 10/0585$ (2010.01)

(52) Cooperative Patent Classification (CPC):
H01M 10/052; H01M 4/134; H01M 4/1395;
H01M 4/382; H01M 4/628; H01M 10/0562;
H01M 10/0565; H01M 10/0585

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **BASF SE**
  **67056 Ludwigshafen am Rhein (DE)**
• **Justus-Liebig-Universität Gießen**
  **35390 Gießen (DE)**

(72) Inventors:
• **GEISS, Matthias**
  **63683 Ortenberg (DE)**
• **JANEK, Jürgen**
  **35392 Gießen (DE)**
• **WENZEL, Sebastian**
  **35392 Gießen (DE)**
• **LICHTWEISS, Thomas**
  **35392 Gießen (DE)**

(74) Representative: **Eisenführ Speiser**
**Patentanwälte Rechtsanwälte PartGmbB**
**Postfach 10 60 78**
**28060 Bremen (DE)**

(54)  **ELECTROCHEMICAL CELL HAVING ANODE/ELECTROLYTE INTERFACE AND AN ARTICLE AND A PROCESS FOR PREPARING IT**

(57)    Described are an article for preparation of an electrochemical cell, said electrochemical cell having (i) an electrode capable of cyclically plating and stripping of lithium metal and (ii) a lithium ion conducting electrolyte, the use of said article for preparing an electrochemical cell having (i) an electrode capable of cyclically plating and stripping of lithium metal and (ii) a lithium ion conducting electrolyte, a process for preparing said article, an electrochemical cell and a process for preparing it.

FIG.1A        FIG.1B        FIG.1C

EP 4 050 677 A1

**Description**

Described are an article for preparing an electrochemical cell, said electrochemical cell having (i) an electrode capable of cyclically plating and stripping of lithium metal and (ii) a lithium ion conducting electrolyte, the use of said article for preparing an electrochemical cell having (i) an electrode capable of cyclically plating and stripping of lithium metal and (ii) a lithium ion conducting electrolyte, a process for preparing said article, an electrochemical cell and a process for preparing it.

Lithium batteries typically contain an electrode capable of cyclically plating and stripping of lithium metal. Plating of lithium metal occurs during charging of the cell, and stripping occurs during discharging of the cell. The electrode of an electrochemical cell where during discharging of the cell a net negative charge is released is called the anode. During lifetime of an electrochemical cell, a couple of charge/discharge cycles are performed with cyclically plating and stripping of lithium metal at the anode. Anodes capable of cyclically plating and stripping of lithium metal typically contain lithium metal, a metal alloy containing lithium, a metal capable of alloying with lithium or a metal alloy capable of alloying with lithium. Since lithium metal is a strong reducing agent, there is a risk that lithium metal from the anode undergoes a redox reaction with the electrolyte of the cell, e.g. reduces metal cations present in the electrolyte to the corresponding metals. Such reactions do not contribute to power generation of the electrochemical cell and reduce the cell capacity. Moreover, reaction between lithium metal from the anode and the electrolyte may destroy the electrochemical cell. For these reasons it is desirable to prevent contact between the electrode capable of cyclically plating and stripping of lithium metal and the electrolyte by means of an anode/electrolyte interface which allows passage of lithium ions but not of electrons, so that redox reactions between the electrolyte and lithium metal are not possible. Such kind of anode/electrolyte interface is also referred to as a passivation layer. An important requirement for such passivation layer is a high conductivity for lithium ions so that the passivation layer does not excessively increase the internal resistance of the cell.

It is therefore an object of the present invention to provide an electrochemical cell having an anode capable of cyclically plating and stripping of lithium metal, a lithium ion conducting electrolyte and an anode/electrolyte interface preventing chemical reactions between the lithium metal of the anode and the electrolyte, wherein said anode/electrolyte interface has a high conductivity for lithium ions; as well as an article and a process for preparing such electrochemical cell.

In order to achieve this object, according to a first aspect there is provided an article for preparing an electrochemical cell, said electrochemical cell having (i) an electrode capable of cyclically plating and stripping of lithium metal and (ii) a lithium ion conducting electrolyte. In other words, said article is configured and intended for being used for preparing an electrochemical cell having (i) an electrode capable of cyclically plating and stripping of lithium metal and (ii) a lithium ion conducting electrolyte.

Said article according to a first aspect comprises

(1) a layer comprising

at least one selected from the group consisting of

(1a) a compound having a composition according to formula (I)

$$P_xN_yO_z \qquad (I)$$

wherein

$0 < x \leq 5$, preferably $0.01 \leq x \leq 5$,

$0 < y \leq 5$, preferably $0.01 \leq y \leq 5$,

$$z \leq 0.1 * (x + y + z)$$

preferably $3x \leq 3y + 2z \leq 5x$

preferably $x \leq y$

preferably $0.4 \leq x/y \leq 1$, further preferably $0.4 \leq x/y \leq 0.8$

(1b) a compound having a composition according to formula (II)

$$LiaP_xNyO_z \qquad (II)$$

wherein

$0 < a \leq 18$, preferably $0.01 \leq x \leq 12$

$1 \leq x \leq 6$

$1 \leq y \leq 16$

$$z \leq 0.1 * (a + x + y + z)$$

(1c) a mixture comprising at least one phosphide of lithium and at least one nitride of lithium and

(2) a layer selected from the group consisting of

(2a) a layer comprising an electroactive material capable of cyclically plating and stripping of lithium metal

(2b) a layer comprising a lithium ion conducting solid electrolyte

(2c) a layer comprising a porous electronically insulating material capable of incorporating a lithium ion conducting liquid electrolyte

wherein said layer (2) is adjacent a surface of said layer (1).

An article according to the first aspect comprises a layer (1) as defined above. Said layer (1) is configured and intended to act as an anode/electrolyte interface or as a precursor for forming an anode/electrolyte interface in an electrochemical cell.

An article according to the first aspect comprises at least one of a layer (2a) as defined above, a layer (2b) as defined above and a layer (2c) as defined above.

Layer (2a) comprising an electroactive material capable of cyclically plating and stripping of lithium metal is configured and intended to act as an anode in an electrochemical cell. Suitable electroactive materials capable of cyclically plating and stripping of lithium metal are known in the art. Preferably, said electroactive material is selected from the group consisting of lithium metal, metal alloys containing lithium, metals capable of alloying with lithium and metal alloys capable of alloying with lithium. Metals capable of alloying with lithium are e.g. Si, Sn, Ag and In.

Layer (2b) comprising a lithium ion conducting solid electrolyte is configured and intended to act as a lithium ion conducting solid electrolyte layer in an electrochemical cell which is an all solid state cell. The lithium ion conducting solid electrolyte of layer (2b) is not selected from the group consisting of compounds of formula (II), $Li_3P$, $Li_3N$ and products of the reaction of compounds of formula (I) with Li. Preferably, said solid electrolyte is selected from the group consisting of inorganic lithium ion conducting solid electrolytes and lithium ion conducting polymer electrolytes. Such inorganic lithium ion conducting solid electrolytes and lithium ion conducting polymer electrolytes are known in the art.

Preferred solid electrolytes are selected from the group consisting of lithium transition metal halides, lithium containing sulfides, lithium containing oxysulfides, lithium-containing oxy-phosphates, lithium-containing thiophosphates, lithium argyrodites (e.g. lithium containing halo-thiophosphates), and lithium containing oxyphosphonitrides, salt-in-polymer-electrolytes, and polymer single ion conductors.

Herein, the term "lithium-containing" means that cations of other metals than lithium may also be present in the chemical compound forming the solid electrolyte.

Lithium argyrodites are disclosed e.g. in US 8,075,865 B2 and are e.g. compounds of formula (*)

$$Li_{(12-n-x)}B^{n+}X^{2-}_{6-x}Y^-_x \qquad (*)$$

wherein

B is selected from the group consisting of P, As, Ge, Ga, Sb, Si, Sn, Al, In, Ti, V, Nb, and Ta,

X is selected from the group consisting of S, Se, and Te,

Y is selected from the group consisting of Cl, Br, I, F, CN, OCN, SCN, and $N_3$,

and $0 \leq x \leq 2$.

Argyrodites wherein B is more than one of P, As, Ge, Ga, Sb, Si, Sn, Al, In, Ti, V, Nb, and Ta are also known.

Suitable solid electrolytes include solid materials according to general formula (**) as disclosed in WO 2020/038960 A1

$$\text{LiaPSbOcXdYe} \qquad (**)$$

wherein

X and Y are different and are selected from the group consisting of Cl, Br and I,

a is in the range of from 4.5 to 7.5,

b is in the range of from 3.0 to 5.4,

c is in the range of from 0.1 to 2,

b + c is in the range of from 4.4 to 6,

d is in the range of from 0 to 1.6,

e is in the range of from 0 to 1.6,

d + e is in the range of from 0.4 to 1.8,

b + c + d + e is in the range of from 4.8 to 7.6,

and preferably a = 3 + 2(b + c - 4) + d + e.

Further suitable solid electrolytes are solid materials (lithium transition metal halides) according to general formula (***) as disclosed in non-prepublished patent application EP 19207728.7- 1108

$$\text{Li}_{3-n*x}\text{M}_{1-x}\text{M'}_x\text{X}_y \qquad (***)$$

wherein

M is one or more selected from the group consisting of Sc, In, Lu, La, Er, Y and Ho;

M' is one or more selected from the group consisting of Ti, Zr, Hf, Nb and Ta;

X is one or more selected from the group consisting of halides and pseudohalides;

$0.12 \leq x \leq 0.42$;

$5.8 \leq y \leq 6.2$;

n is the difference between the valences of M' and M.

Other suitable solid electrolytes are solid materials (lithium transition metal halides) according to general formula (****) as disclosed in non-prepublished patent application EP 20170190.1-1106

$$\text{LiaAX4} \qquad (****)$$

wherein

X is one or more selected from the group consisting of Cl, F, Br and I
(a) A is $\text{M1}_b\text{M2}_c$

wherein

M1 is a first trivalent metal and M2 is a second trivalent metal different from M1,
$0.1 \leq b \leq 0.8$,
$0 \leq c \leq 0.7$,
$0.6 \leq (b+c) \leq 0.8$
$a = 4 - 3(b+c)$

(b) A is $M1_d M3_e$
wherein

M1 is a trivalent metal and M3 is a divalent metal,
$0.3 \leq d \leq 0.8$,
$0.2 \leq e \leq 0.7$,
$0.9 \leq (d+e) \leq 1.1$,
$a = 4 - 3d - 2e$.

Salt-in-polymer electrolytes comprise a lithium ion conducting salt e.g. $LiClO_4$ dispersed in a polymeric matrix, e.g. polyethylene oxide (PEO).

Suitable solid electrolytes are e.g. solid materials (lithium containing halo-thiophosphates) according to general formula (') as disclosed in non-prepublished patent application EP 20169037.7 - 1108

$$Li_{6+2*n-x-m*y}M_y PS_{5+n-x}X_{1+x} \qquad (')$$

wherein

M is one or more selected from the group consisting of divalent metals Mg, Ca, Sr, Ba and

Zn, and trivalent metals Sc, La, Al and Ga;

X is one or more selected from the group consisting of F, Cl, Br and I;

$0 \leq x \leq 0.8$, preferably $0.15 \leq x \leq 0.6$;

$0.01 \leq y \leq 0.25$, preferably $0.05 \leq y \leq 0.2$, more preferably $0.05 \leq y \leq 0.15$;

$0 \leq n \leq 0.05$;

m is 2 when M is a divalent metal and m is 3 when M is a trivalent metal.

Other suitable solid electrolytes are e.g. solid materials (lithium containing halo-thioantimo-niates) according to general formula (") as disclosed in non-prepublished patent application PCT/EP2020/070526

$$Li_{7+x-y}M_x Sb_{1-x}S_{6-y}X_y \qquad (")$$

wherein

M is one or more selected from the group consisting of Si, Ge and Sn;

$0 \leq x \leq 1$;

X is one or more selected from the group consisting of Cl, Br and I;

$0.05 \leq y \leq 2$.

Further suitable solid electrolytes are e.g. solid materials (lithium haloboro-oxysulfides) according to general formula (''') as disclosed in non-prepublished patent application PCT/EP2020/066610

$$Li_{2x+z}B_{2y}M_aO_{b*a}S_{x+3y}X_z \qquad (''')$$

wherein

M is one or more selected from the group consisting of P, Si, Ge, As and Sb

X is one or more selected from the group consisting of halides and pseudohalides

x is in the range of from 0.1 to 0.7

y is in the range of from 0.05 to 0.5

z is in the range of from 0.01 to 0.5

a is in the range of from 0.01 to 0.5, preferably a is in the range of from 0.05 to 0.48

b is in the range of from 1.9 to 2.6, preferably b is in the range of from 2 to 2.5

$0.995 \le x + y + z + a \le 1.005$, preferably x + y + z + a =1.

Layer (2c) comprising a porous electronically insulating material capable of incorporating a lithium ion conducting liquid electrolyte is configured and intended to act as a separator layer in an electrochemical cell which contains a liquid lithium ion conducting electrolyte.

Such separator materials are known in the art, e.g. porous alumina membranes. Separator membranes are commercially available.

In certain cases, an article according to the first aspect as defined above consists of a layer (1) as defined above and a layer (2a) as defined above adjacent a surface of layer (1).

In certain cases, an article according to the first aspect as defined above comprises or consists of a layer (1) as defined above and a layer (2a) as defined above adjacent a surface of layer (1), and a current collector layer (3) adjacent a surface of layer (2a) opposite to layer (1). Said current collector layer (3) is configured and intended to act as a current collector in an electrochemical cell. Suitable current collector materials are known in the art, e.g. copper foils or nickel foils.

In certain cases, an article according to the first aspect as defined above consists of a layer (1) as defined above and a layer (2b) as defined above adjacent a surface of layer (1).

In certain cases, an article according to the first aspect as defined above comprises or consists of a layer (1) as defined above and a layer (2b) as defined above adjacent a surface of layer (1), and a layer (2a) as defined above adjacent a surface of layer (1) opposite to layer (2b).

In certain cases, an article according to the first aspect as defined above comprises or consists of a layer (1) as defined above, a layer (2b) as defined above adjacent a surface of layer (1), and a layer (2a) as defined above adjacent a surface of layer (1) opposite to layer (2b), and a current collector layer (3) adjacent a surface of layer (2a) opposite to layer (1). Said current collector layer (3) is configured and intended to act as a current collector in an electrochemical cell. Suitable current collector materials are known in the art.

In certain cases, an article according to the first aspect as defined above consists of a layer (1) as defined above and a layer (2c) as defined above adjacent a surface of layer (1).

In certain cases, an article according to the first aspect as defined above comprises or consists of a layer (1) as defined above and a layer (2c) as defined above adjacent a surface of layer (1) and a layer (2a) as defined above adjacent a surface of layer (1) opposite to layer (2c).

In certain cases, an article as defined above comprises or consists of a layer (1) as defined above and a layer (2c) as defined above adjacent a surface of layer (1), and a layer (2a) as defined above adjacent a surface of layer (1) opposite to layer (2c), and a current collector layer (3) adjacent a surface of layer (2a) opposite to layer (1). Said current collector layer (3) is configured and intended to act as a current collector in an electrochemical cell. Suitable current collector materials are known in the art.

When preparing an electrochemical cell comprising

(i) an electrode capable of cyclic plating and stripping of lithium metal, and

(ii) a lithium ion conducting electrolyte,
the above-defined article is assembled with the other components of the electrochemical cell in such manner that an electrochemical cell is obtained wherein

(iii) a layer comprising at least one selected from the group consisting of

(1a) a compound having a composition according to formula (I)

(1b) a compound having a composition according to formula (II)

(1c) a mixture comprising at least one phosphide of lithium and at least one nitride of lithium

is pos itioned between said electrode (i) and said electrolyte (ii).

In certain cases, layer (1) comprises or consists of

(1a) a compound having a composition according to formula (I)

$$P_xN_yO_z \qquad (I)$$

wherein

$0 < x \leq 5$, preferably $0.01 \leq x \leq 5$,

$0 < y \leq 5$, preferably $0.01 \leq y \leq 5$,

$z \leq 0.1 * (x + y + z)$, preferably $z \leq 0.05 * (x + y + z)$, most preferably $z \leq 0.01 * (x + y + z)$,

preferably $3x \leq 3y + 2z \leq 5x$

preferably $x \leq y$

preferably $0.4 \leq x/y \leq 1$, further preferably $0.4 \leq x/y \leq 0.8$.

In the context of an article according to the above-defined first aspect, layer (1) comprising a compound having a composition according to formula (I) as defined above is referred to as a layer (1a).

A compound according to formula (I) may be considered as a nitride of phosphorus, optionally containing minor amounts of oxide of phosphorus. The oxygen content is 10 atom% or less, preferably 5 atom% or less, further preferably 1 atom% or less, especially preferably 0.5 atom% or less, most preferably 0.1 atom% or less. An oxygen content of 10 atom% or less means that $z \leq 0.1 * (x + y + z)$. An oxygen content of 5 atom% or less means that $z \leq 0.05 * (x + y + z)$. An oxygen content of 1 atom% or less means that $z \leq 0.01 * (x + y + z)$. An oxygen content of 0.5 atom% or less means that $z \leq 0.005 * (x + y + z)$. An oxygen content of 0.1 atom% or less means that $z \leq 0.001 * (x + y + z)$.

In a compound having a composition according to formula (I), phosphorus (P) may be in the oxidation state +3 or + 5. In case all P is in the oxidation state +3, the following condition is satisfied: $3x = 3y + 2z$. In case all P is in the oxidation state +5, the following condition is satisfied: $5x = 3y + 2z$.

In a preferred compound of formula (I) P is in the oxidation state +5 and $5x = 3y + 2z$. Preferably, in said compound $z \leq 0.05 * (x + y + z)$, more preferably $z = 0$.

Most preferably said compound having a composition according to formula (I) is $P_3N_5$.

A layer (1a) comprising a compound having a composition according to formula (I) as defined above is configured and intended to act as a precursor for forming an anode/electrolyte interface in an electrochemical cell prepared using the above-defined article. On contact with lithium metal (from layer (2a) if present, or from the anode of an electrochemical cell which is prepared using the article comprising layer (1a)), the compound having a composition according to formula (I) reacts to form a mixture comprising at least one phosphide of lithium and at least one nitride of lithium. For instance, when the compound having a composition according to formula (I) is $P_3N_5$, the reaction with lithium metal may be as follows:

$$P_3N_5 + 24\ Li => 3\ Li_3P + 5\ Li_3N.$$

$Li_3N$ may react with further $P_3N_5$ to form compounds of formula (II) as defined above.

The reaction between the compound having a composition according to formula (I) and lithium metal is a redox reaction involving transfer of electrons. As a result of said reaction, a layer comprising a mixture comprising at least one phosphide of lithium and at least one nitride of lithium, or a layer comprising a compound having a composition according to formula (II) is formed. Phosphides of lithium and nitrides of lithium as well as compounds having a composition according to formula (II) do not conduct electrons. Thus, as soon as the layer comprising products formed by the reaction between the compound having a composition according to formula (I) and metallic lithium has reached a certain thickness, electron transfer between the compound of formula (I) and metallic lithium is no longer possible and the reaction between the compound having a composition according to formula (I) and metallic lithium ceases. Thus, the surface of layer (2a) resp. of the anode of an electrochemical cell is passivated.

In order to allow complete conversion of the compound having a composition according to formula (I) into a mixture comprising at least one phosphide of lithium and one nitride of lithium resp. into a compound having a composition according to formula (II), the layer (1a) comprising a compound having a composition according to formula (I) must have a sufficiently small thickness. Preferably, said layer (1a) has a thickness of 10 nm or less, more preferably of 8 nm or less, but not less than 2 nm in order to achieve sufficient coverage. It is important to avoid that a layer comprising an unreacted compound having a composition according to formula (I) remains because compounds having a composition according to formula (I) exhibit low conductivity for lithium ions.

An article containing a layer (1a) comprising a compound having a composition according to formula (I) may be obtained by synthesizing a compound having a composition according to formula (I) ex-situ, and forming a layer (1a) comprising said compound having a composition according to formula (I) on a surface of a layer (2) as defined above. Herein, the layer (2) may be anyone selected from a layer (2a) as defined above, a layer (2b) as defined above and a layer (2c) as defined above.

Alternatively, a compound having a composition according to formula (I) may be obtained by chemical or physical vapor deposition on a surface of a layer (2) as defined above. Herein, the layer (2) may be anyone selected from a layer (2a) as defined above, a layer (2b) as defined above and a layer (2c) as defined above.

In certain cases, layer (1) comprises or consist of

(1b) a compound having a composition according to formula (II)

$$Li_aP_xN_yO_z \qquad (II)$$

wherein

$0 < a \leq 18$, preferably $0.01 \leq x \leq 12$

$1 \leq x \leq 6$

$1 \leq y \leq 16$

$z \leq 0.1 * (a + x + y + z)$

In the context of an article according to the above-defined first aspect, a layer (1) comprising a compound having a composition according to formula (II) as defined above is referred to as a layer (1b).

A compound according to formula (II) may be considered as a lithium phosphonitride, optionally containing minor amounts of lithium phosphate. The oxygen content is 10 atom% or less, preferably 5 atom% or less, further preferably 1 atom% or less, especially preferably 0.5 atom% or less, most preferably 0.1 atom% or less. An oxygen content of 10 atom% or less means that $z \leq 0.1 * (a+ x + y + z)$. An oxygen content of 5 atom% or less means that $z \leq 0.05 * (a+ x + y + z)$. An oxygen content of 1 atom% or less means that $z \leq 0.01 * (a + x + y + z)$. An oxygen content of 0.5 atom% or less means that $z \leq 0.005 * (a + x + y + z)$. An oxygen content of 0.1 atom% or less means that $z \leq 0.001 * (a + x + y + z)$.

In a compound having a composition according to formula (II), phosphorus (P) is usually in the oxidation state + 5. Thus, the following condition is satisfied: $a + 5x = 3y + 2z$. Preferably, in said compound $z \leq 0.05 * (a + x + y + z)$, more preferably z = 0.

Most preferably, the compound having a composition according to formula (II) is selected from the group consisting of $LiPN_2$, $Li_4PN_3$, $Li_7PN_4$, $Li_{10}P_4N_{10}$, $Li_{12}P_3N_9$, and $Li_{18}P_6N_{16}$.

$Li_4PN_3$ and $Li_{12}P_3N_9$ are polymorphs. For details, see Bertscheler et al., Chem. Eur. J. 2017, 23, 9592 - 9599.

Further polymorphs of $LiPN_2$, $Li_4PN_3$, $Li_7PN_4$, $Li_{10}P_4N_{10}$, and $Li_{18}P_6N_{16}$ are possible.

A layer (1b) comprising a compound having a composition according to formula (II) as defined above is configured and intended to act as an anode/electrolyte interface in an electrochemical cell prepared using the above-defined article.

An article containing a layer (1b) comprising a compound having a composition according to formula (II) may be obtained by synthesizing a compound having a composition according to formula (II) ex-situ, e.g. by reaction between $Li_3N$ and $P_3N_5$, and forming a layer (1b) comprising said compound having a composition according to formula (II) on a surface of a layer (2) as defined above. Herein, the layer (2) may be anyone selected from a layer (2a) as defined above, a layer (2b) as defined above and a layer (2c) as defined above. For details of the synthesis of compounds having a composition according to formula (II), see e.g. Bertscheler et al., Chem. Eur. J. 2017, 23, 9592 - 959 and Schnick et al., Angew. Chem. 103 (1991) No. 7, 857-858.

Alternatively, an article containing a layer (1b) comprising a compound having a composition according to formula (II) may be obtained from an article comprising a layer (1a) comprising a compound having a composition according to formula (I) as defined above and a layer (2a) comprising lithium metal or a metal alloy containing lithium metal. Herein, a compound having a composition according to formula (II) is obtained in-situ by reaction between a compound having a composition according to formula (I), e.g. $P_3N_5$, and lithium metal from an adjacent layer (2a) as defined above. For instance, $P_3N_5$ reacts with metallic lithium to $Li_3P$ and $Li_3N$, and $Li_3N$ reacts with further $P_3N_5$ to a compound having a composition according to formula (II).

Alternatively, a compound having a composition according to formula (II) may be obtained by chemical or physical vapor deposition on a surface of a layer (2) as defined above. Herein, the layer (2) may be anyone selected from a layer (2a) as defined above, a layer (2b) as defined above and a layer (2c) as defined above.

Compounds having a composition according to formula (II) as defined above are conductive for lithium ions. Preferably a layer (1b) comprising a compound having a composition according to formula (II) as defined above has an ionic conductivity of $10^{-4}$ S/cm or more, preferably of $10^{-4}$ S/cm to $10^{-3}$ S/cm. Compounds having a composition according to formula (II) as defined above have a negligible electronic conductivity. Thus, layer (1b) is capable of allowing transfer of lithium ions between the anode and the electrolyte and preventing reaction between metallic lithium and the electrolyte.

In certain cases, layer (1) comprises or consists of

(1c) a mixture comprising at least one phosphide of lithium and at least one nitride of lithium.

For instance, the mixture comprises or consists of $Li_3P$ and $Li_3N$.

In the context of an article according to the above-defined first aspect, a layer (1) comprising a mixture comprising at least one phosphide of lithium and at least one nitride of lithium as defined above is referred to as a layer (1c).

A layer (1c) comprising a mixture comprising at least one phosphide of lithium and at least one nitride of lithium is configured and intended to act as a precursor for forming an anode/electrolyte interface or as an anode/electrolyte interface in an electrochemical cell prepared using the above-defined article.

An article containing a layer (1c) comprising a mixture comprising at least one phosphide of lithium and at least one nitride of lithium may be obtained by preparing said mixture ex-situ, and forming a layer (1c) comprising said mixture on a surface of a layer (2) as defined above. Herein, the layer (2) may be anyone selected from a layer (2a) as defined above, a layer (2b) as defined above and a layer (2c) as defined above.

Alternatively, an article containing a layer (1c) comprising a mixture comprising at least one phosphide of lithium and at least one nitride of lithium may be obtained from an article comprising a layer (1a) comprising a compound having a composition according to formula (I) as defined above and a layer (2a) comprising lithium metal or a metal alloy containing lithium metal. Herein, a mixture comprising at least one phosphide of lithium and at least one nitride of lithium, e.g. a mixture comprising $Li_3N$ and $Li_3P$, is obtained in-situ by reaction between a compound having a composition according to formula (I), e.g. $P_3N_5$, and lithium metal from an adjacent layer (2a) as defined above.

Alternatively, a mixture comprising at least one phosphide of lithium and at least one nitride of lithium, e.g. a mixture comprising $Li_3N$ and $Li_3P$, may be obtained by chemical or physical vapor deposition on a surface of a layer (2) as defined above. Herein, the layer (2) may be anyone selected from a layer (2a) as defined above, a layer (2b) as defined above and a layer (2c) as defined above.

Mixtures comprising at least one phosphide of lithium and at least one nitride of lithium, e.g. mixtures comprising $Li_3N$ and $Li_3P$, are conductive for lithium ions. Preferably a layer (1c) comprising a mixture comprising at least one phosphide of lithium and at least one nitride of lithium, e.g. a mixture comprising $Li_3N$ and $Li_3P$, has an ionic conductivity of $10^{-4}$ S/cm or more, preferably of $10^{-4}$ S/cm to $10^{-3}$ S/cm. Mixtures comprising at least one phosphide of lithium and at least one nitride of lithium have a negligible electronic conductivity. Thus, layer (1c) is capable of allowing transfer of lithium ions between the anode and the electrolyte and preventing reaction between metallic lithium and the electrolyte.

Preferably, in an article as defined above, said layer (1) has a thickness of 10 nm or less, more preferably of 8 nm or less, but not less than 2 nm to achieve sufficient coverage. In case the layer is thicker, the internal resistance of a cell prepared using the article as defined above may be too high.

According to a second aspect, there is provided a process for preparing an article according to the first aspect as defined above. Said process comprises the steps of

- providing a layer (2) selected from the group consisting of

(2a) a layer comprising an electroactive material capable of cyclically plating and stripping of lithium metal

(2b) a layer comprising a lithium ion conducting solid electrolyte

(2c) a layer comprising a porous electronically insulating material capable of incorporating a lithium ion conducting liquid electrolyte

- forming on a surface of said layer (2) a layer (1) by depositing on said surface of said layer (2) at least one selected from the group consisting of

(1a) a compound having a composition according to formula (I)

(1b) a compound having a composition according to formula (II)

(1c) a mixture comprising at least one phosphide of lithium and at least one nitride of lithium.

In the second step of the above-defined process, depositing of

(1a) a compound having a composition according to formula (I)

(1b) a compound having a composition according to formula (II)

(1c) a mixture comprising at least one phosphide of lithium and at least one nitride of lithium

on a surface of said layer (2) may be carried out using any suitable technique. Suitable techniques include gas phase deposition, liquid phase deposition and aerosol deposition. Such techniques are known in the art. Gas phase deposition includes physical vapor deposition (e.g. ion beam assisted deposition, sputter deposition) and chemical vapor deposition. Liquid phase deposition includes dipping, coating, printing and many other well-known techniques.

Preferably, in the second step of the process according to the above-defined second aspect comprises one or more of

- gas phase deposition

- liquid phase deposition

- aerosol deposition

of at least one selected from the group consisting of

(1a) a compound having a composition according to formula (I)

(1 b) a compound having a composition according to formula (II)

(1c) a mixture comprising at least one phosphide of lithium and at least one nitride of lithium

on said surface of said layer (2).

In certain cases, an article as defined above is prepared by forming a layer (1) as defined above on a surface of a layer (2a) as defined above.

In certain cases, an article as defined above is prepared by forming a layer (1) as defined above on a surface of a layer (2a) as defined above having a current collector layer (3) adjacent a surface of layer (2a) opposite to said surface on which layer (1) is formed. In certain cases, in a further step a layer (2b) as defined above or a layer (2c) as defined above is deposited on a surface of layer (1) opposite to layer (2a).

In certain cases, an article as defined above is prepared by forming a layer (1) as defined above on a surface of a layer (2b) as defined above. In certain cases, in a further step a layer (2a) as defined above is deposited on a surface of layer (1) opposite to layer (2b). In certain cases, in a further step a current collector layer (3) is deposited on a surface of layer (2a) opposite to layer (1).

In certain cases, an article as defined above is prepared by forming a layer (1) as defined above on a surface of a layer (2c) as defined above. In certain cases, in a further step a layer (2a) as defined above is deposited on a surface of layer (1) opposite to layer (2c). In certain cases, in a further step a current collector layer (3) is deposited on a surface of layer (2a) opposite to layer (1).

More specifically, an article comprising or consisting of a layer (1b) resp. (1c) as defined above and a layer (2a) as defined above adjacent a surface of said layer (1b) resp. (1c) may be obtained by a process comprising the steps of

- providing a layer (2a) comprising an electroactive material selected from the group consisting of lithium metal and metal alloys containing lithium,

- forming on a surface of said layer (2a) a layer (1) comprising
  (1a) a compound having a composition according to formula (I)
  by depositing said compound on said surface of said layer (2a),

- allowing reaction between said compound having a composition according to formula (I) and lithium from layer (2a).

Alternatively, an article comprising or consisting of a layer (1 b) resp. (1c) as defined above and a layer (2a) as defined above adjacent a surface of said layer (1b) resp. (1c) may be obtained by a process comprising the steps of

- providing a layer (2b) comprising a lithium ion conducting solid electrolyte

- forming on a surface of said layer (2b) a layer (1) comprising
  (1a) a compound having a composition according to formula (I)
  by depositing said compound on said surface of said layer (2b)

- depositing a layer (2a) comprising an electroactive material selected from the group consisting of lithium metal and metal alloys containing lithium on a surface of said layer (1a) opposite to said layer (2b)

- allowing reaction between said compound having a composition according to formula (I) and lithium from layer (2a).

Alternatively, an article comprising or consisting of a layer (1 b) resp. (1c) as defined above and a layer (2a) as defined above adjacent a surface of said layer (1b) resp. (1c) may be obtained by a process comprising the steps of

- providing a layer (2c) comprising a porous electronically insulating material capable of incorporating a lithium ion conducting liquid electrolyte

- forming on a surface of said layer (2c) a layer (1) comprising
  (1a) a compound having a composition according to formula (I)
  by depositing said compound on said surface of said layer (2c),

- depositing a layer (2a) comprising an electroactive material selected from the group consisting of lithium metal and metal alloys containing lithium on a surface of said layer (1a) opposite to said layer (2c)

- allowing reaction between said compound having a composition according to formula (I) and lithium from layer (2a).

In each of the above-defined processes for preparing an article comprising or consisting of a layer (1b) resp. (1c) as defined above and a layer (2a) as defined above adjacent a surface of said layer (1b) resp. (1c), the compound having a composition according to formula (I) reacts with lithium from layer (2a), so that a layer (1b) comprising a compound having a composition according to formula (II), or a layer (1c) comprising a mixture comprising at least one phosphide of lithium and at least one nitride of lithium is formed in situ. In order to allow complete conversion of the compound having a composition according to formula (I) into a mixture comprising at least one phosphide of lithium and one nitride of lithium, resp. into a compound having a composition according to formula (II), the layer (1a) comprising a compound having a composition according to formula (I) must have a sufficiently small thickness. Preferably, said layer (1a) has a thickness of 10 nm or less, more preferably of 8 nm or less, but not less than 2 nm in order to achieve sufficient coverage. It is important to avoid that a layer comprising unreacted compound having a composition according to formula (I) remains because compounds having a composition according to formula (I) exhibit low conductivity for lithium ions.

An article according to the first aspect as defined above may be used for preparing an electrochemical cell having

(i) an electrode capable of cyclically plating and stripping of lithium metal, and

(ii) a lithium ion conducting electrolyte.

According to a third aspect, there is provided an electrochemical cell which may be prepared using an article according to the above-defined first aspect. Said electrochemical cell comprises

(i) an electrode capable of cyclically plating and stripping of lithium metal

(ii) a lithium ion conducting electrolyte,

(iii) positioned between said electrode (i) and said electrolyte (ii), a layer comprising at least one selected from the group consisting of

(iiia) a compound having a composition according to formula (I) as defined above.

(iiib) a compound having a composition according to formula (II) as defined above.

(iiic) a mixture comprising at least one phosphide of lithium and at least one nitride of lithium.

Electrode (i) is the anode of the electrochemical cell. The electrode (i) capable of cyclically plating and stripping of lithium metal may contain an electroactive material selected from the group consisting of selected from the group consisting of lithium metal, metal alloys containing lithium, metals capable of alloying with lithium and metal alloys capable of alloying with lithium. Metals capable of alloying with lithium are e.g. Si, Sn, Ag and In.

It is understood that an electrochemical cell according to the third aspect also comprises a cathode (vi) (electrode where during discharging of the cell a net positive charge is released). Suitable electroactive materials for the cathode are known in the art. Typical cathode active materials are capable of cyclically intercalating and de-intercalating lithium ions. Preferred cathode active materials are selected from the group consisting of materials having a composition according to general formula (III)

$$Li_{1+t}[Co_xMn_yNi_zM_u]_{1-t}O_2 \qquad (III)$$

wherein

$0 \leq x \leq 1$

$0 \leq y \leq 1$

$0 \leq z \leq 1$

$0 \leq u \leq 0.15$

M if present is one or more elements selected from the group consisting of Al, Mg, Ba, B, and transition metals other than Ni, Co, and Mn,

$x + y + z > 0$

$x + y + z + u = 1$

$-0.05 \leq t \leq 0.2$.

In certain cathode active materials according to formula (III), M may be one of Al, Mg, Ti, Mo, Nb, W and Zr. Exemplary cathode active materials of formula (I) are $Li_{1+t}[Ni_{0.88}CO_{0.08}Al_{0.04}]_1-tO_2$, $Li_{1+t}[Ni_{0.905}CO_{0.0475}Al_{0.0475}]_{1-t}O_2$, and $Li_{1+t}[Ni_{0.91}CO_{0.045}Al_{0.045}]_{1-t}O_2$, wherein in each case $-0.05 \leq t \leq 0.2$.

Exemplary cathode active materials are compounds of formula (IIIa):

$$Li_{1+t}A_{1-t}O_2 \qquad (IIIa)$$

wherein

A comprises nickel
and one or both members of the group consisting of cobalt and manganese,

and optionally

- one or more further transition metals not selected from the group consisting of nickel, cobalt and manganese, wherein said further transition metals are preferably selected from the group consisting of molybdenum, titanium, tungsten, zirconium,

- one or more elements selected from the group consisting of aluminum, barium, boron and magnesium,

wherein at least 50 mole-% of the transition metal of A is nickel;

t      is a number in the range of from -0.05 to 0.2.

Exemplary cathode active materials of formula (IIIa) are $Li_{1+t}[Ni_{0.85}CO_{0.10}Mn_{0.05}]_{1-t}O_2$, $Li_{1+t}[Ni_{0.87}CO_{0.05}Mn_{0.08}]_{1-t}O_2$, $Li_{1+t}[Ni_{0.83}CO_{0.12}Mn_{0.05}]_{1-t}O_2$, $Li_{1+t}[Ni_{0.6}O_{0.2}Mn_{0.2}]_{1-t}O_2$, $Li_{1+t}[Ni_{0.88}Co_{0.08}Al_{0.04}]_{1-t}O_2$, $Li_{1+t}[Ni_{0.905}Co_{0.0475}Al_{0.0475}]_{1-t}O_2$, and $Li_{1+t}[Ni_{0.91}Co_{0.045}Al_{0.045}]_{1-t}O_2$, wherein in each case $-0.05 \leq t \leq 0.2$.

In other cathode active materials according to formula (III), M is not present. Those cathode active materials have a composition according to general formula (IIIb):

$$Li_{1+t}[Co_xMn_yNi_z]_{1-t}O_2 \qquad (IIIb)$$

wherein

$0 \leq x \leq 1$

$0 \leq y \leq 1$

$0 \leq z \leq 1$

$$x + y + z = 1$$

$-0.05 \leq t \leq 0.2$.

Preferably, the cathode active material according to general formula (IIIb) is a mixed oxide of lithium and at least one of nickel and manganese. More preferably, the cathode active material is a mixed oxide of lithium, nickel and one or both members of the group consisting of cobalt and manganese.

Exemplary cathode active materials according to formula (IIIb) are $LiCoO_2$, $Li_{1+t}[Ni_{0.85}Co_{0.10}Mn_{0.05}]_{1-t}O_2$, $Li_{1+t}[Ni_{0.87}Co_{0.05}Mn_{0.08}]_{1-t}O_2$, $Li_{1+t}[Ni_{0.83}Co_{0.12}Mn_{0.05}]_{1-t}O_2$, and $Li_{1+t}[Ni_{0.6}Co_{0.2}Mn_{0.2}]_{1-t}O_2$ (NCM622) and $LiNi_{0.5}Mn_{1.5}O_4$, wherein in each case $-0.05 \leq t \leq 0.2$.

The lithium ion conducting electrolyte (ii) may be a lithium ion conducting solid electrolyte, or a lithium ion conducting liquid electrolyte incorporated in a porous electronically insulating material. The lithium ion conducting solid resp. liquid electrolyte (ii) is not selected from the group consisting of compounds of formula (II), $Li_3P$, $Li_3N$ and products of the reaction of compounds of formula (I) with Li. In case of solid electrolytes, said lithium ion conducting solid electrolyte (ii) is preferably selected from the group consisting of inorganic lithium ion conducting solid electrolytes and lithium ion conducting polymer electrolytes. Such inorganic lithium ion conducting solid electrolytes and lithium ion conducting polymer electrolytes are known in the art. For specific lithium ion conducting solid electrolytes, see the disclosure provided in the context of the first aspect. Suitable lithium ion conducting liquid electrolytes are also known in the art.

In the context of an electrochemical cell according to the above-defined third aspect, a layer (iii) comprising a compound having a composition according to formula (I) as defined above is referred to as a layer (iiia), a layer (iii) comprising a compound having a composition according to formula (II) as defined above is referred to as a layer (iiib), and a layer (iiic) comprising a mixture comprising at least one phosphide of lithium and at least one nitride of lithium is referred to as a layer (iiic).

In an electrochemical cell as defined above which contains a layer (iiia) comprising a compound having a composition according to formula (I) said layer acts as a precursor for forming an anode/electrolyte interface. On contact with lithium metal from electrode (i) (the anode) of the electrochemical cell, the compound having a composition according to formula (I) reacts to form a mixture comprising at least one phosphide of lithium and at least one nitride of lithium. For instance, when the compound having a composition according to formula (I) is $P_3N_5$, the reaction with lithium may be as follows:

$$P_3N_5 + 24\ Li \Rightarrow 3\ Li_3P + 5\ Li_3N.$$

$Li_3N$ may react with further $P_3N_5$ to form compounds of formula (II) as defined above.

The reaction between the compound having a composition according to formula (I) and lithium metal is a redox reaction involving transfer of electrons. As a result of said reaction, a layer comprising a mixture comprising at least one phosphide of lithium and at least one nitride of lithium, or a layer comprising a compound having a composition according to formula (II) is formed. Phosphides of lithium and nitrides of lithium as well as compounds having a composition according to formula (II) do not conduct electrons. Thus, as soon as the layer comprising products formed by the reaction between the compound having a composition according to formula (I) and metallic lithium has reached a certain thickness, electron transfer between the compound of formula (I) and metallic lithium is no longer possible and the reaction between the compound having a composition according to formula (I) and metallic lithium ceases. Thus, the surface of the anode (ii) of the electrochemical cell is passivated.

In order to allow complete conversion of the compound having a composition according to formula (I) into a mixture comprising at least one phosphide of lithium and one nitride of lithium resp. into a compound having a composition according to formula (II), the layer (iiia) comprising a compound having a composition according to formula (I) must have a sufficiently small thickness. Preferably, said layer (iiia) has a thickness of 10 nm or less, more preferably of 8 nm or less, but not less than 2 nm to achieve sufficient coverage. It is important to avoid that a layer comprising an unreacted compound having a composition according to formula (I) remains because compounds having a composition according to formula (I) exhibit low conductivity for lithium ions.

Due to the reaction of compounds having a composition according to formula (I) as defined above and metallic lithium, a layer (iiia) comprising a compound having a composition according to formula (I) as defined above is transferred into a layer (iiib) comprising a compound having a composition according to formula (II) or into a layer (iiic) comprising a mixture comprising at least one phosphide of lithium and at least one nitride of lithium during lifetime of the electrochemical cell. Thus, in an electrochemical cell according to the invention which is not yet freshly assembled, usually a layer (iiib) comprising a compound having a composition according to formula (II) or a layer (iiic) comprising a mixture comprising at least one phosphide of lithium and at least one nitride of lithium is present.

In an electrochemical cell as defined above which contains a layer (iiib) comprising a compound having a composition according to formula (II) said layer (iiib) acts as an anode/electrolyte interface. Preferably a layer (iiib) has an ionic conductivity of $10^{-4}$ S/cm or more, preferably of $10^{-4}$ S/cm to $10^{-3}$ S/cm. Thus, layer (iiib) is capable of allowing transfer of lithium ions between the anode (i) and the electrolyte (ii) and preventing reaction between metallic lithium of anode (i) and the electrolyte (ii).

In an electrochemical cell as defined above which contains a layer (iiic) comprising a mixture comprising at least one phosphide of lithium and at least one nitride of lithium said layer (iiic) acts as an anode/electrolyte interface. Preferably, layer (iiic) has an ionic conductivity of $10^{-4}$ S/cm or more, preferably of $10^{-4}$ S/cm to $10^{-3}$ S/cm. Thus, layer (iiic) is capable of allowing transfer of lithium ions between the anode (i) and the electrolyte (ii) and preventing reaction between metallic lithium from anode (i) and the electrolyte (ii).

According to a fourth aspect, there is provided a process for preparing an electrochemical cell according to the third aspect as defined above. Said process comprises the steps of

- providing an article according to the first aspect as defined above or preparing said article by a process according to the second aspect as defined above

- assembling said article with the other components of the electrochemical cell in such manner that an electrochemical cell comprising

    (i) an electrode capable of cyclic plating and stripping of lithium metal

    (ii) a lithium ion conducting electrolyte

    (iii) positioned between said electrode (i) and said electrolyte (ii), a layer comprising at least one selected from the group consisting of

        (iiia) a compound having a composition according to formula (I)

        (iiib) a compound having a composition according to formula (II)

        (iiic) a mixture comprising at least one phosphide of lithium and at least one nitride of lithium

is obtained.

It is understood that the other components of the electrochemical cell with which the article according to the first aspect resp. the article prepared according to the process of the second aspect is assembled comprise at least a cathode (vi) (electrode where during discharging of the cell a net positive charge is released). Suitable electroactive materials for the cathode are known in the art. For specific cathode electroactive materials, see the disclosure provided in the context of the third aspect.

It is understood that those components of the cell which are present in the article prepared or provided in the first step of the above-defined process, or precursors of which are present in said article, are not included in the other components of the electrochemical cell with which said article is assembled in the second step of the above-defined process. For instance, when the article prepared or provided in the first step contains a layer (2a) comprising an electroactive material capable of cyclically plating and stripping of lithium metal which is configured and intended to act as an anode (i) in an electrochemical cell, the other components of the electrochemical cell with which said article is assembled in the second step of the above-defined process do not include an anode. For instance, when the article prepared or provided in the first step contains a layer (2b) comprising a lithium ion conducting solid electrolyte which is configured and intended to act as a lithium ion conducting solid electrolyte layer, the other components of the electrochemical cell with which said article is assembled in the second step of the above-defined process do not include a solid electrolyte layer. For instance, when the article prepared or provided in the first step contains a layer (2c) comprising a porous electronically insulating material capable of incorporating a lithium ion conducting liquid electrolyte which is configured and intended to act as a separator layer, the other components of the electrochemical cell with which said article is assembled in the second step of the above-defined process do not include a separator layer.

More specifically, an electrochemical cell comprising

(i) an electrode capable of cyclically plating and stripping of lithium metal

(ii) a lithium ion conducting electrolyte,

(iii) positioned between said electrode (i) and said electrolyte (ii), a layer comprising at least one selected from the group consisting of

(iiib) a compound having a composition according to formula (II) as defined above.

(iiic) a mixture comprising at least one phosphide of lithium and at least one nitride of lithium

may be obtained by a process comprising the steps of

- providing an article according to the first aspect, said article comprising a layer (1a) comprising a compound having a composition according to formula (I) as defined above and no layer (2a) as defined above, or preparing said article by a process as defined above

- assembling said article with the other components of the electrochemical cell in such manner that an electrochemical cell comprising

(i) an electrode capable of cyclically plating and stripping of lithium metal

(ii) a lithium ion conducting electrolyte,

(iiia) positioned between said electrode (i) and said electrolyte (ii), a layer comprising a compound having a composition according to formula (I)

- allowing reaction between said compound having a composition according to formula (I) as defined above and lithium.

In the above-defined process, the compound having a composition according to formula (I) reacts with lithium from anode (i) so that a layer (iib) comprising a compound having a composition according to formula (II), or layer (iiic) comprising a mixture comprising at least one phosphide of lithium and at least one nitride of lithium is formed in situ. Thus, the anode/electrolyte interface is formed in situ. In order to allow complete conversion of the compound having a composition according to formula (I) into a mixture comprising at least one phosphide of lithium and one nitride of lithium resp. into a compound having a composition according to formula (II), the layer (iiia) comprising a compound having a composition according to formula (I) must have a sufficiently small thickness. Preferably, said layer (iiia) has a thickness of 10 nm or less, more preferably of 8 nm or less, but not less than 2 nm in order to achieve sufficient coverage. It is important to avoid that a layer comprising unreacted compound having a composition according to formula (I) remains because compounds having a composition according to formula (I) exhibit low conductivity for lithium ions.

A further aspect of the present invention is the use of one selected from the group consisting of

- a compound having a composition according to formula (I), or

- a compound having a composition according to formula (II), or

- a mixture comprising at least one phosphide of lithium and at least one nitride of lithium

for preventing contact between (i) an electrode capable of cyclically plating and stripping of lithium metal and (ii) a lithium ion conducting electrolyte in an electrochemical cell.

The invention is illustrated further by the following examples which are not limiting.

Examples

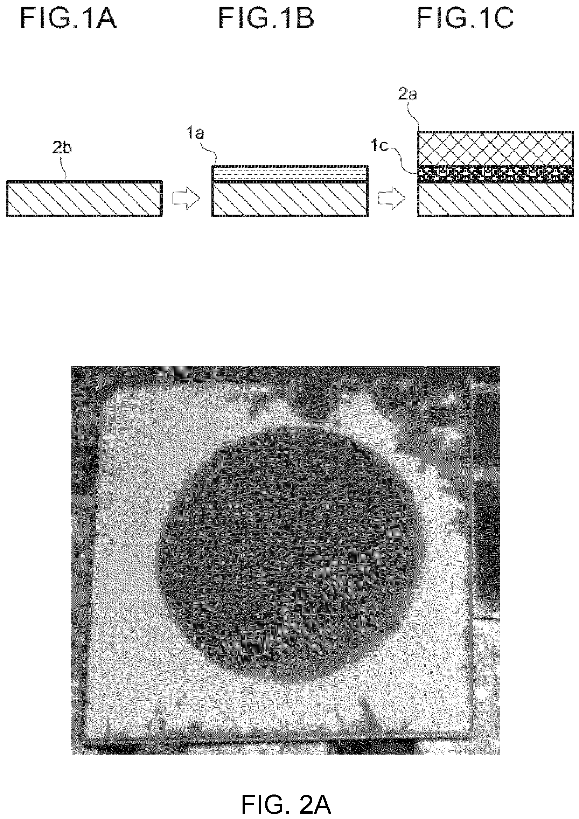

A layer (2b) comprising a lithium-containing solid electrolyte (NASICON-type ceramics) is provided (shown in cross-sectional view in fig. 1A).

On a predetermined circular region of a surface of said solid electrolyte layer (2b) a layer (1a) is formed by ion beam assisted deposition of $P_3N_5$. Said layer (1a) has a thickness of 8 nm. Since deposition of $P_3N_5$ was restricted to said predetermined region on the surface of layer (2b), the surface of electrolyte layer (2b) is not completely covered by layer (1a). Fig. 1B shows a cross section of the region where the $P_3N_5$ layer (1a) is deposited on the surface of the solid electrolyte layer (2b).

In a further step, a layer (2a) comprising lithium metal is formed by vapor deposition of lithium on the surface of layer (2b) comprising the circular region where the $P_3N_5$ layer (1a) is deposited. Lithium metal deposition is not restricted to the circular region where the $P_3N_5$ layer (1a) is deposited on the surface of solid electrolyte layer (2b). Thus outside the circular region where the $P_3N_5$ layer (1a) is deposited on the surface of solid electrolyte layer (2b), lithium metal layer (2a) is deposited directly on the surface of the solid electrolyte layer (2b). Fig. 2A is a photograph of the surface on which lithium layer (2a) is deposited. The photograph is taken immediately after deposition of lithium. The quadratic contour in fig. 2A indicates the circumference of the surface on which lithium metal layer (2a) is deposited. The circular contour in fig. 2A indicates the circumference of the circular region on which $P_3N_5$ layer (1a) was deposited before deposition of lithium metal layer (2a).

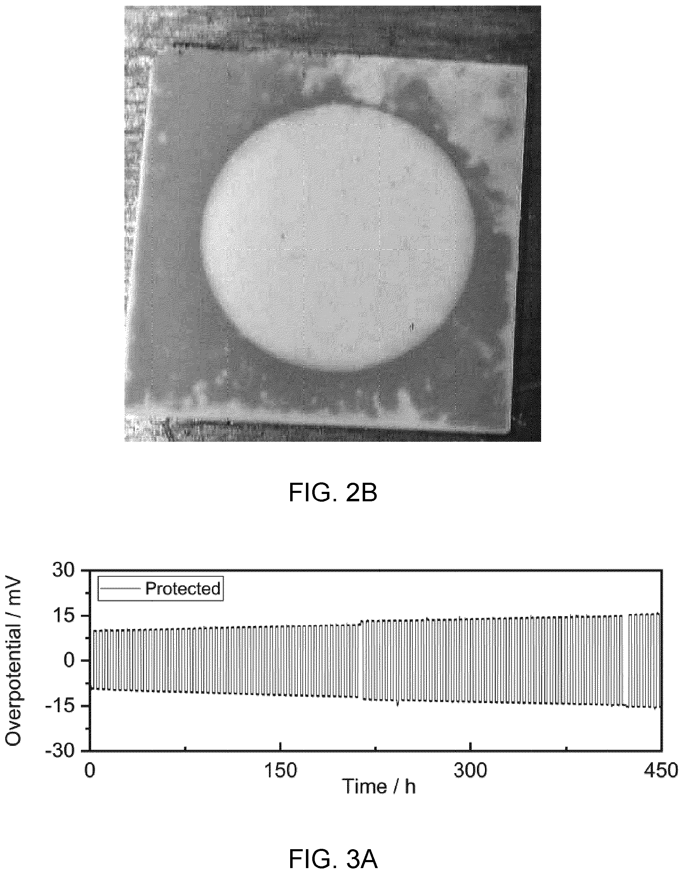

After deposition of lithium metal layer (2a) reaction between lithium from layer (2a) and the underneath layer ($P_3N_5$ layer (1a) in the circular region wherein $P_3N_5$ layer (1 a) is deposited, solid electrolyte layer (2b) outside said circular region) takes place. After 24 hours, formation of reaction products is evidenced by a visible change of colors on the surface on which lithium layer (2a) is deposited. Fig. 2B is a photograph of the surface on which lithium layer (2a) is deposited, taken 24 hours after deposition of lithium. Outside the circular region on which $P_3N_5$ layer (1a) was deposited, a gray color has emerged because cations of aluminum and titanium from the solid electrolyte (2b) were reduced by metallic lithium from layer (2a) to metallic aluminum and titanium. The circular region on which $P_3N_5$ layer (1a) was deposited exhibits a white color due to the formation of $Li_3N$ and $Li_3P$. Due to the reaction of $P_3N_5$ with lithium from layer (2a), a layer (1c) comprising a mixture comprising $Li_3N$ and $Li_3P$ was formed in situ. Fig. 1C shows a cross section of the region where layer (1c) has formed by reaction with lithium from superimposed layer (2a). Layer (1c) which extends between solid electrolyte layer (2b) and lithium metal layer (2a) prevents reaction between metallic lithium of layer (2a) and the solid electrolyte of layer (2b).

An electrochemical cell having the following configuration was prepared:

$$Li|P_3N_5|\beta-Li_3PS_4|P_3N_5|Li$$

In the freshly prepared cell, the thickness of the $P_3N_5$ layer adjacent the surface of each lithium electrode was 8 nm. Due to the contact with lithium, reaction products of $P_3N_5$ with lithium are formed in the cell. Said reaction products may contain a mixture comprising $Li_3N$ and $Li_3P$ and/or a compound having a composition according to formula (II).

For comparison, an electrochemical cell having the following configuration was prepared:

$$Li|\beta-Li_3PS_4|Li$$

Over 450 hours, both cells were subjected to a galvanostatic current of 100 $\mu A/cM^2$ the direction of which was changed every two hours, and the cell overvoltage was monitored. In this way, cyclic plating and stripping of lithium metal occurred at each electrode, simulating the charge/discharge cycles of an anode capable of plating and stripping lithium metal in a lithium battery.

The overvoltage is determined by the internal resistance of the cell. Degradation of the cell due to undesired reactions between lithium from the electrodes and the solid electrolyte results in an increase of the internal resistance and accordingly an increase of the overvoltage.

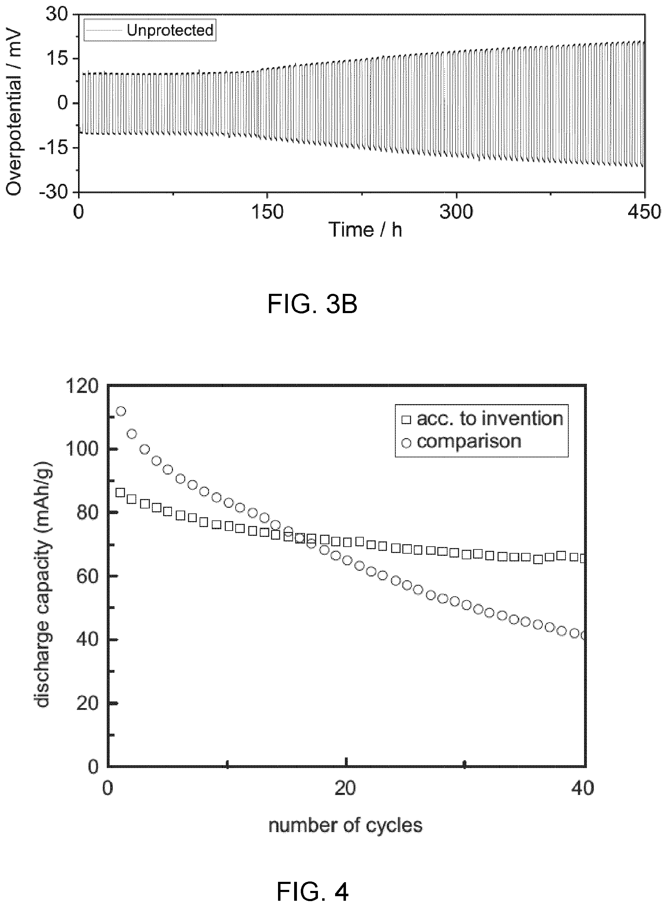

Figure 3A (labelled "protected") shows the overvoltage of the cell in which layers comprising $P_3N_5$ resp. its reaction products with lithium form electrode/electrolyte interfaces. Figure 3B (labelled "unprotected") shows the overvoltage of the comparison cell as a function of time.

The increase of the overvoltage of the cell having layers comprising $P_3N_5$ resp. its reaction products with lithium as electrode/electrolyte interfaces is significantly slower than the increase of the overvoltage of the comparison cell. This indicates that the layers comprising $P_3N_5$ resp. its reaction products, which prevent contact between lithium metal and the solid electrolyte, reduce and delay the degradation of the electrolyte.

The initial overvoltage is almost the same for both cells. Accordingly, the thickness of the layers comprising $P_3N_5$ was sufficiently small so that complete conversion of $P_3N_5$ to reaction products with lithium occurred, and there remained virtually no unreacted $P_3N_5$ which would cause an increase of the cell resistance and the cell voltage.

An electrochemical cell according to the invention having the following configuration was prepared:

$$Li|P_3N_5|\beta\text{-}Li_3PS_4|LiNi_{0.6}Co_{0.2}Mn_{0.2}O_2$$

In the freshly prepared cell, the thickness of the $P_3N_5$ layer adjacent the surface of the lithium anode was 8 nm. Due to the contact with lithium, reaction products of $P_3N_5$ with lithium are formed in the cell. Said reaction products may contain a mixture comprising $Li_3N$ and $Li_3P$ and/or a compound having a composition according to formula (II). Thus, in said cell,

(iii) a layer comprising $P_3N_5$ resp. its reaction products with lithium

is positioned between (i) an electrode capable of cyclically plating and stripping of lithium metal and (ii) a lithium ion conducting solid electrolyte.

For comparison, an electrochemical cell having the following configuration was prepared:

$$Li|\beta\text{-}Li_3PS_4|LiNi_{0.6}Co_{0.2}Mn_{0.2}O_2.$$

In fig. 4, the discharge capacity of both cells as function of the number of charge/discharge cycles is displayed. The initial discharge capacity of the comparison cell (110 mAh/g) is higher than the initial discharge capacity of the cell according to the invention (85 mAh/g). However, during cycling the discharge capacity of the comparison cell decreases rapidly, and after 40 cycles, the capacity decreased to about 40 mAh/g. In contrast, the cell according to the invention did not exhibit such a significant loss of capacity during cycling, and after 40 cycles the capacity was 70 mAh/g. The significant loss of capacity during cycling of the comparison cell is attributed to decomposition and degradation of the solid electrolyte at the solid electrolyte/lithium metal interface.

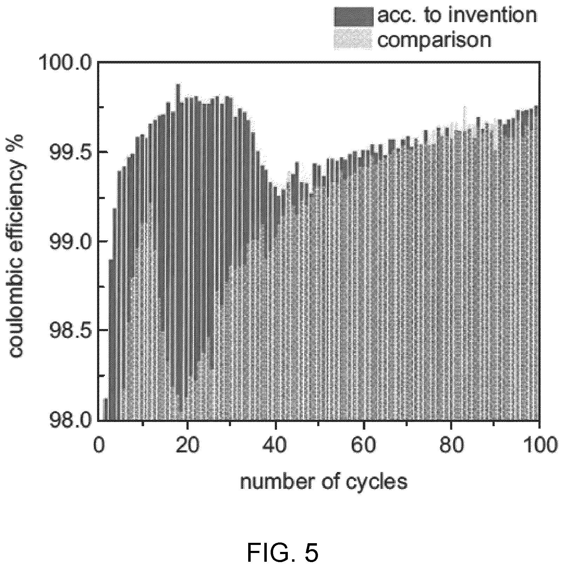

In addition, during the first 40 charge/discharge cycles, the cell according to the invention exhibits a higher coulombic efficiency (ratio between discharge capacity and charge capacity) than the comparison cell, see fig. 5.

## Claims

1. Article for preparing of an electrochemical cell, said electrochemical cell having (i) an electrode capable of cyclically plating and stripping of lithium metal and (ii) a lithium ion conducting electrolyte,
said article comprising

(1) a layer comprising
at least one selected from the group consisting of

(1a) a compound having a composition according to formula (I)

$$P_xN_yO_z \qquad (I)$$

wherein

$0 < x \leq 5$,
$0 < y \leq 5$,

$$z \leq 0.1 * (x + y + z)$$

(1b) a compound having a composition according to formula (II)

$$Li_aP_xN_yO_z \qquad (II)$$

wherein

$0 < a \leq 18$,
$1 \leq x \leq 6$
$1 \leq y \leq 16$

$$z \leq 0.1 * (a + x + y + z)$$

(1c) a mixture comprising at least one phosphide of lithium and at least one nitride of lithium

and
(2) a layer selected from the group consisting of

(2a) a layer comprising an electroactive material capable of cyclically plating and stripping of lithium metal
(2b) a layer comprising a lithium ion conducting solid electrolyte
(2c) a layer comprising a porous electronically insulating material capable of incorporating a lithium ion conducting liquid electrolyte

wherein said layer (2) is adjacent a surface of said layer (1).

2. Article according to claim 1, wherein in formula (I)
x, y and z satisfy the following condition: $5x = 3y + 2z$,
wherein preferably said compound having a composition according to formula (I) is $P_3N_5$.

3. Article according to claim 1, wherein in formula (II)
a, x, y and z satisfy the following condition: $a + 5x = 3y + 2z$,
wherein preferably said compound having a composition according to formula (II) is selected from the group consisting of $LiPN_2$, $Li_4PN_3$, $Li_7PN_4$, $Li_{10}P_4N_{10}$, $Li_{12}P_3N_9$, and $Li_{18}P_6N_{16}$.

4. Article according to any of claims 1 to 3 wherein said layer (1) has a thickness of 10 nm or less, preferably 8 nm or less.

5. Article according to claim 1 or 3 comprising a layer (1)
comprising one of

(1b) a compound having a composition according to formula (II)
(1c) a mixture comprising at least one phosphide of lithium and at least one nitride of lithium,

said layer (1) having an ionic conductivity of $10^{-4}$ S/cm or more, preferably of $10^{-4}$ S/cm to $10^{-3}$ S/cm.

6. Article according to any of claims 1 to 5, said article comprising a layer (2a) comprising an electroactive material capable of cyclically plating and stripping of lithium metal, wherein said electroactive material is selected from the group consisting of lithium metal, metal alloys containing lithium, metals capable of alloying with lithium and metal alloys capable of alloying with lithium, wherein said layer (2a) is adjacent a surface of said layer (1).

7. Article according to any of claims 1 to 6, said article comprising a layer (2b) comprising a lithium ion conducting solid electrolyte, wherein said solid electrolyte is selected from the group consisting of inorganic lithium ion conducting solid electrolytes and polymer electrolytes, wherein said layer (2b) is adjacent a surface of said layer (1).

8. An article according to any of claims 1 to 6, comprising

(1) a layer comprising at least one selected from the group consisting of

(1a) a compound having a composition according to formula (I) as defined in claim 1 or 2
(1b) a compound having a composition according to formula (II) as defined in claim 1 or 3
(1c) a mixture comprising at least one phosphide of lithium and at least one nitride of lithium

(2a) a layer comprising an electroactive material capable of cyclically plating and stripping of lithium metal wherein said layer (2a) is adjacent a surface of layer (1),
and optionally
(3) a current collector layer, wherein said current collector layer (3) is adjacent a surface of layer (2a) opposite to layer (1).

9. An article according to any of claims 1 to 7, comprising

(1) a layer comprising at least one selected from the group consisting of

(1a) a compound having a composition according to formula (I) as defined in claim 1 or 2
(1b) a compound having a composition according to formula (II) as defined in claim 1 or 3
(1c) a mixture comprising at least one phosphide of lithium and at least one nitride of lithium

(2b) a layer comprising a lithium ion conducting solid electrolyte adjacent a surface of layer (1)
and
(2a) a layer comprising an electroactive material capable of cyclically plating and stripping of lithium metal, wherein said layer (2a) is adjacent a surface of layer (1) opposite to layer (2b)
and optionally
(3) a current collector layer, wherein said current collector layer (3) is adjacent a surface of layer (2a) opposite to layer (1).

10. An article according to any of claims 1 to 6, comprising

(1) a layer comprising at least one selected from the group consisting of

(1a) a compound having a composition according to formula (I) as defined in claim 1 or 2
(1b) a compound having a composition according to formula (II) as defined in claim 1 or 3
(1c) a mixture comprising at least one phosphide of lithium and at least one nitride of lithium

(2c) a layer comprising a porous electronically insulating material capable of incorporating a lithium ion conducting liquid electrolyte
and
(2a) a layer comprising an electroactive material capable of cyclically plating and stripping of lithium metal, wherein said layer (2a) is adjacent a surface of layer (1) opposite to layer (2c)
and optionally
(3) a current collector layer, wherein said current collector layer (3) is adjacent a surface of layer (2a) opposite to layer (1).

11. Use of an article according to any of claims 1 to 10 for preparing an electrochemical cell having (i) an electrode capable of cyclically plating and stripping of lithium metal and (ii) a lithium ion conducting electrolyte.

12. An electrochemical cell comprising

(i) an electrode capable of cyclically plating and stripping of lithium metal
(ii) a lithium ion conducting electrolyte,
(iii) positioned between said electrode (i) and said electrolyte (ii), a layer comprising at least one selected from the group consisting of

(iiia) a compound having a composition according to formula (I) as defined in claim 1 or 2
(iiib) a compound having a composition according to formula (II) as defined in claim 1 or 3
(iiic) a mixture comprising at least one phosphide of lithium and at least one nitride of lithium.

**13.** Process for preparing an article according to any of claims 1 to 10, said process comprising the steps of

- providing a layer (2) selected from the group consisting of

(2a) a layer comprising an electroactive material capable of cyclically plating and stripping of lithium metal
(2b) a layer comprising a lithium ion conducting solid electrolyte
(2c) a layer comprising a porous electronically insulating material capable of incorporating a lithium ion conducting liquid electrolyte

- forming on a surface of said layer (2) a layer (1) by depositing on said surface of said layer (2) at least one selected from the group consisting of

(1a) a compound having a composition according to formula (I)
(1b) a compound having a composition according to formula (II)
(1c) a mixture comprising at least one phosphide of lithium and at least one nitride of lithium

by depositing said compound resp. said mixture on said surface of said layer (2).

**14.** Process according to claim 13, said process comprising the steps of

- providing a layer (2a) comprising an electroactive material selected from the group consisting of lithium metal and metal alloys containing lithium,
- forming on a surface of said layer (2a) a layer (1) comprising
(1a) a compound having a composition according to formula (I)
by depositing said compound on said surface of said layer (2a),
- allowing reaction between said compound having a composition according to formula (I) and lithium

or comprising the steps of

- providing a layer selected from the group consisting of

(2b) a layer comprising a lithium ion conducting solid electrolyte
(2c) a layer comprising a porous electronically insulating material capable of incorporating a lithium ion conducting liquid electrolyte

- forming on a surface of said layer (2b) resp. (2c) a layer (1) comprising
(1a) a compound having a composition according to formula (I)
by depositing said compound on said surface of said layer (2b) resp. (2c),
- depositing a layer (2a) comprising an electroactive material selected from the group consisting of lithium metal and metal alloys containing lithium on a surface of said layer (1a) opposite to said layer (2b) resp. (2c)
- allowing reaction between said compound having a composition according to formula (I) and lithium from layer (2a).

**15.** Process for preparing an electrochemical cell, said process comprising the steps of

- providing an article according to any of claims 1 to 10 or preparing said article by a process according to any of claims 13 and 14
- assembling said article with the other components of the electrochemical cell in such manner that an electrochemical cell comprising

(i) an electrode capable of cyclic plating and stripping of lithium metal
(ii) a lithium ion conducting electrolyte,
(iii) positioned between said electrode (i) and said electrolyte (ii), a layer comprising at least one selected from the group consisting of

(iiia) a compound having a composition according to formula (I) as defined in claim 1 or 2
(iiib) a compound having a composition according to formula (II) as defined in claim 1 or 3
(iiic) a mixture comprising at least one phosphide of lithium and at least one nitride of lithium

is obtained.

FIG.1A        FIG.1B        FIG.1C

FIG. 2A

FIG. 2B

FIG. 3A

FIG. 3B

FIG. 4

FIG. 5

Europäisches
Patentamt

European
Patent Office

Office européen
des brevets

## EUROPEAN SEARCH REPORT

Application Number

EP 21 15 9562

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/127275 A1 (VISCO STEVEN J [US] ET AL) 23 April 2020 (2020-04-23) <br> * paragraphs [0004], [0059], [0235], [0356] - [0358] * <br> ----- | 1-9, 11-15 | INV. <br> H01M4/134 <br> H01M4/1395 <br> H01M4/38 <br> H01M4/62 <br> H01M10/052 <br> H01M10/0562 <br> H01M10/0565 <br> H01M10/0585 |
| X | US 2016/248100 A1 (JOO YONG LAK [US] ET AL) 25 August 2016 (2016-08-25) <br> * figure 14 * <br> * paragraph [0173] * <br> ----- | 1,6,8, 10-12 | |

TECHNICAL FIELDS
SEARCHED      (IPC)

H01M

The present search report has been drawn up for all claims

| Place of search | Date of completion of the search | Examiner |
|---|---|---|
| Munich | 30 July 2021 | Gregori, Giuliano |

EPO FORM 1503 03.82 (P04C01)

## ANNEX TO THE EUROPEAN SEARCH REPORT
## ON EUROPEAN PATENT APPLICATION NO.

EP 21 15 9562

This annex lists the patent family members relating to the patent documents cited in the above-mentioned European search report.
The members are as contained in the European Patent Office EDP file on
The European Patent Office is in no way liable for these particulars which are merely given for the purpose of information.

30-07-2021

| Patent document cited in search report | | Publication date | Patent family member(s) | | Publication date |
|---|---|---|---|---|---|
| US 2020127275 | A1 | 23-04-2020 | US 2020127275 A1<br>US 2021126236 A1 | | 23-04-2020<br>29-04-2021 |
| US 2016248100 | A1 | 25-08-2016 | US 2016248100 A1<br>WO 2015061383 A1 | | 25-08-2016<br>30-04-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8075865 B2
- WO 2020038960 A1
- EP 19207728
- EP 2017019011106
- EP 2016903771108
- EP 2020070526 W
- EP 2020066610 W

**Non-patent literature cited in the description**

- **BERTSCHELER et al.** *Chem. Eur. J.,* 2017, vol. 23, 9592-9599
- **BERTSCHELER et al.** *Chem. Eur. J.,* 2017, vol. 23, 9592-959
- **SCHNICK et al.** *Angew. Chem.,* 1991, vol. 103 (7), 857-858